# EUROPÄISCHE PATENTSCHRIFT

(11) **EP 4 394 312 B1**
(45) Veröffentlichungstag und Bekanntmachung des Hinweises auf die Patenterteilung: **07.10.2026**
(21) Anmeldenummer: 23218016.6
(22) Anmeldetag: 19.12.2023
(51) Int. Cl.: G01B 11/27, G01B 21/24

(54) **LENKERAUSRICHTUNGSEINRICHTUNG FÜR EIN ZWEI- ODER DREIRADFAHRZEUG**
HANDLEBAR ALIGNMENT DEVICE FOR A TWO- OR THREE-WHEELED VEHICLE
DISPOSITIF D'ALIGNEMENT DE GUIDON POUR VÉHICULE À DEUX OU TROIS ROUES

(30) Priorität: 28.12.2022 DE 102022134917
(43) Veröffentlichungstag der Anmeldung: 03.07.2024
(73) Patentinhaber: Karl A. Steinel GmbH, 08645 Bad Elster (DE)
(72) Erfinder: Bräunlich, Christian, 08626 Adorf (DE)
(74) Vertreter: Steiniger, Carmen

(56) Entgegenhaltungen:
- EP-A1- 4 350 281
- GB-A- 2 486 192
- US-A1- 2015 323 315
- TUNE GMBH: "Manual Spurtreu Tune Tool", 31 March 2016 (2016-03-31), pages 1 - 4, XP093159513, Retrieved from the Internet <URL:https://www.matosvelo.fr/public/Tests/Materiel/Tune/Spurtreu/Tune_Spurtreu.pdf> [retrieved on 20240506]
- SCHMOLKE: "Triathlon Lenker / Zeitfahren Clip-On", 17 May 2023 (2023-05-17), pages 1 - 1, XP093159939, Retrieved from the Internet <URL:https://www.schmolke-carbon.com/wp-content/uploads/2018/06/UNADJUSTEDNONRAW_thumb_1c3ba.jpg> [retrieved on 20240506]

## Beschreibung

Die vorliegende Offenbarung betrifft eine Lenkerausrichtungseinrichtung für ein Zwei- oder Dreiradfahrzeug mit einer Halteeinrichtung und einem Laser, wobei die Halteeinrichtung zwei Haltebügel aufweist, deren freie Enden jeweils ein Halteende bilden, von dem jeweils wenigstens ein Halteelement auskragt, und deren andere Enden an einem Koppelstück der Lenkerausrichtungseinrichtung form-, kraft- und/oder stoffschlüssig miteinander verbunden oder einstückig ausgebildet sind, und die Lenkerausrichtungseinrichtung eine an dem Koppelstück befestigte Laserhalterung aufweist, die den Laser hält, wobei an einem dem Laser gegenüber befindlichen Ende der Laserhalterung ein Abstützelement zur Anlage an einem Rahmen des Zwei- oder Dreiradfahrzeuges angeordnet ist.

Bei Zwei- und Dreiradfahrzeugen, insbesondere bei Fahrrädern, besteht das Problem, dass sich die Lenkerausrichtung relativ zu der Spur des Vorderrades verstellen kann. Es ist daher immer wieder aufs Neue erforderlich, den Lenker nachzujustieren. Häufig behilft man sich hierbei auf sein Augenmaß. Es sind jedoch auch technische Hilfsmittel bekannt, um den Lenker genau auf das Vorderrad ausrichten zu können.

Ein solches bekanntes Hilfsmittel weist eine Sitzplatte mit Ausfräsungen auf, mit welchen die Sitzplatte auf ein durch einen Fahrradlenker und einen Lenkervorbau ausgebildetes T-Stück aufgesetzt werden kann. In der Sitzplatte ist in Verlängerung des Lenkervorbaus eine Bohrung mit einem darin aufgenommenen Punktlaser ausgebildet. Der Lenker wird solange gedreht, bis ein durch den Punktlaser erzeugter Laserpunkt mittig auf dem Vorderrad erscheint, und dann in dieser Position fixiert.

Das bekannte Hilfsmittel setzt voraus, dass der Lenkervorbau immer frei ist, was typischerweise nicht der Fall ist, da hier oft ein anderes Hilfsmittel, wie beispielsweise eine Mobiltelefonhalterung oder ein Tachometer, montiert ist. Auch bei kurzen Lenkervorbauten lässt sich das bekannte Hilfsmittel nicht benutzen, da nicht genügend Auflagefläche für die Sitzplatte vorhanden ist. Zudem können durch den verwendeten Punktlaser Ungenauigkeiten bei der Einstellung entstehen.

Aus dem auf der Internetseite https://www.matosvelo.fr/public/Tests/Materiel/Tune/ spurtreulTune_Spurtreu.pdf veröffentlichten Manual der Tune GmbH "Spurtreu Tune Tool" ist eine Lenkerausrichtungseinrichtung für ein Fahrrad bekannt. Diese weist eine Halteplatte und einen Laser auf. Die bekannte Lenkerausrichtungseinrichtung hat zwei einander gegenüberliegende Halteklammern, mit welchen sie am Lenker befestigt wird. Die Halteklammern haben freie Enden, von welchen jeweils ein den Lenker umgreifendes Klammerelement auskragt. Die jeweils anderen Enden der Halteklammern sind einstückig mit der Halteplatte verbunden. Der Laser geht bei der Lenkerausrichtungseinrichtung durch die Halteplatte. Die Lenkerausrichtungseinrichtung hat ferner an der Halteplatte eine dritte Halteklammer, die auf das Rahmenelement aufgesetzt wird, das den Lenker mit dem Steuerrohr des Fahrrades verbindet.

Die Druckschrift EP 4 350 281 A1 beinhaltet eine Lenkerausrichtungseinrichtung mit einem Grundgestell und einem Laser. Darüber hinaus ist in dieser Druckschrift eine Sattelausrichtungseinrichtung mit Sattelschienenhaken offenbart.

Die Druckschrift US 2015/0323315 A1 beschreibt eine Ausrichteinrichtung, mit der u. a. eine Lenkerstange relativ zu dem Vorderrad des Fahrrades ausgerichtet werden kann. Die Ausrichteinrichtung weist eine Befestigungsgabel mit Klammern auf, durch die sie an einer Struktur eines Fahrrades befestigt werden kann. Die Klammern weisen jeweils einander gegenüberbefindliche Arme auf. Die Befestigungsgabel ist in ein Montageteil eingesteckt, das wiederum schwenkbar mit einer Laserhalterung, die einen Laser hält, verbunden ist.

In der Druckschrift GB 2 486 192 A ist eine Lenkerausrichtungseinrichtung für ein Fahrrad beschrieben. Die Lenkerausrichtungseinrichtung weist zwei bogenförmige Haken auf, die über einen Lenker gehängt und mittels Befestigungselementen daran fixiert werden. Die Haken tragen ein Gehäuse, in dem mehrere Laser in einer Reihe hintereinander angeordnet sind. Die Laser projizieren mehrere Strahlen auf das Vorderrad des Fahrrades.

In der Druckschrift GB 2521854 A ist eine Ausrichteinrichtung beschrieben, mit der ein Lenkrad eines Fahrrades relativ zu einem Vorderrad des Fahrrades ausgerichtet werden kann. Die Ausrichteinrichtung weist zwei Klemmen auf, die jeweils ringförmig um den Lenker an diesem montiert werden, wobei zwischen den Klemmen eine Laservorrichtung angeordnet ist. Die Klemmen sind mit der Laservorrichtung über vertikal klappbare Streben verbunden. Die Laservorrichtung ragt nur unwesentlich weiter nach vorn als die Klemmen, sodass es dann, wenn am Fahrrad beispielsweise vorn eine Lampe montiert ist, schon kaum möglich ist, dass ein von der Laservorrichtung erzeugter Laserstrahl auf das Vorderrad trifft.

Es ist daher die Aufgabe der vorliegenden Erfindung, eine Lenkerausrichtungseinrichtung für ein Zwei- oder Dreiradfahrzeug zur Verfügung zu stellen, die unabhängig von der Länge eines Lenkervorbaus eine einfache und genaue Lenkerausrichtung relativ zu einem Vorderrad des Zwei- oder Dreiradfahrzeuges ermöglicht.

Diese Aufgabe wird durch eine Lenkerausrichtungseinrichtung für ein Zwei- oder Dreiradfahrzeug mit einer Halteeinrichtung und einem Laser gelöst, bei der die Halteeinrichtung zwei Haltebügel aufweist, deren freie Enden jeweils ein Halteende bilden, von dem jeweils wenigstens ein Halteelement auskragt, und deren andere Enden an einem Koppelstück der Lenkerausrichtungseinrichtung form-, kraft- und/oder stoffschlüssig miteinander verbunden oder einstückig ausgebildet sind, und die Lenkerausrichtungseinrichtung eine an dem Koppelstück befestigte Laserhalterung aufweist, die den Laser hält, wobei an einem dem Laser gegenüber befindlichen Ende der Laserhalterung ein Abstützelement zur Anlage an einem Rahmen des Zwei- oder Dreiradfahrzeuges angeordnet ist, wobei
- entweder das Koppelstück eine Schwenkeinrichtung aufweist oder ist, wobei die Schwenkeinrichtung eine Schwenkplatte mit einem gebogenen Führungsschlitz aufweist und die Laserhalterung einen Haltestab mit einem durch den Führungsschlitz führenden Führungs- und Fixierelement aufweist,
- oder das Koppelstück entlang einer in der Laserhalterung ausgebildeten Längsführung verfahrbar und in dieser an einer gewünschten Position mit einem an dem Koppelstück ausgebildeten Führungs- und Fixierelement fixierbar ist.

Die erfindungsgemäße Lenkerausrichtungseinrichtung ist speziell für Fahrräder geeignet, kann aber auch bei anderen Zwei- oder Dreiradfahrzeugen, wie Mopeds oder Dreirädern, eingesetzt werden.

Die erfindungsgemäße Lenkerausrichtungseinrichtung stützt sich einerseits mittels Halteeinrichtung am Lenker des einzustellenden Zwei- oder Dreiradfahrzeuges ab. Hierzu werden die Haltebügel der Halteeinrichtung auf den Lenker aufgelegt, wobei die Halteelemente den Lenker hintergreifen. Die Haltebügel mit den Halteelementen werden hierzu ähnlich wie Brillenbügel einfach auf den Lenker aufgehängt. Damit sind bereits zwei Bezugspunkte an dem Lenker definiert.

Ein dritter Bezugspunkt ergibt sich durch eine Anlage des Abstützelementes an einem Rahmen, wie beispielsweise einem Steuerrohr, des einzustellenden Zwei- oder Dreiradfahrzeuges.

Die mechanische Verbindung zwischen diesen drei Bezugspunkten wird an der erfindungsgemäßen Lenkerausrichtungseinrichtung durch das Koppelstück hergestellt.

Dadurch dass bei der vorliegenden Erfindung ein Ende der Laserhalterung den dritten Bezugspunkt definiert und an dem gegenüberliegenden Ende der Laserhalterung der Laser gehalten ist, ist automatisch auch die Position des Lasers über die drei Bezugspunkte definiert. Wird somit der Lenker verstellt, ändert sich auch die Position eines durch den Laser erzeugten Laserstrahls. Die wird bei der vorliegenden Erfindung dahingehend genutzt, dass der Lenker solange relativ zu dem Vorderrad des Zwei- oder Dreiradfahrzeuges verstellt, bis eine durch den Laser erzeugter Laserstrahl mittig auf dem Vorderrad zu sehen ist. In dieser Position ist die Ausrichtung des Lenkers im rechten Winkel zu der des Vorderrades.

Bei der erfindungsgemäßen Lenkerausrichtungseinrichtung können die Haltebügel mit so ausgebildet werden, dass sie sich an eventuellen Aufbauten am Lenker vorbei erstrecken als auch z. B. eine Fahrradlampe überragen, sodass die entsprechenden Aufbauten am Lenker belassen werden können. Im Ergebnis kann die Lenkerausrichtung schnell und ohne Aufwand vorgenommen werden.

In einer bevorzugten Ausführungsform der vorliegenden Erfindung ist der Laser ein Kreuzlinienlaser. Der Kreuzlinienlaser zeichnet sich im Vergleich zu dem im Stand der Technik verwendeten Punktlaser dadurch aus, dass er nicht nur einen Punkt sondern Linien auf dem Vorderrad erzeugt, was eine wesentlich sicherere Justierung, insbesondere bei schwierigen Lichtverhältnissen, ermöglicht.

In einer vorteilhaften Ausführungsform der Erfindung weist die Laserhalterung an ihrem dem Abstützelement gegenüberliegenden Laserhalteende einen in eine Durchgangsbohrung mündenden Längsschlitz auf, wobei der Laser durch die Durchgangsbohrung hindurchgeführt ist. Vorzugsweise ist quer zu dem Längsschlitz ein Fixiermittel zum Zusammenziehen oder -drücken des Längsschlitzes vorgesehen. Als Fixiermittel kann beispielsweise eine Fixierschraube genutzt werden, die in eine in der Laserhalterung ausgebildete und quer durch den Längsschlitz führende Fixierbohrung eingeführt oder einführbar ist. Durch den Längsschlitz kann die Durchgangsbohrung beim Einführen des Lasers leicht aufgeweitet werden, um den Laser problemlos einführen zu können. Durch ein nachfolgendes Zusammenziehen des Schlitzes mittels des Fixiermittels wird dieser geschlossen und der Laser sicher gehalten.

Es hat sich als besonders günstig erwiesen, wenn das Abstützelement einen V-förmigen Querschnitt aufweist. Damit kann sich das Abstützelement sicher an unterschiedliche Rahmenkonturen anlegen.

Beispielsweise kann das Abstützelement aus zwei Prismen oder aus zwei die V-förmige Stützkerbe zwischen sich einschließenden Stützdornen ausgebildet sein. Dadurch ergibt sich eine besonders vorteilhafte Ausrichtung.

In einer Ausgestaltung der vorliegenden Erfindung weist die Laserhalterung eine Längsführung auf und ist an dem Koppelstück ein Führungs- und Fixierelement ausgebildet, der in der Längsnut führbar ist. Dadurch kann das Koppelstück mit den damit verbundenen Koppelenden der Haltebügel entlang der Laserhalterung hin- und herbewegt und in einer günstigen Position fixiert werden. So kann die Lenkerausrichtungseinrichtung optimal an die Geometrien des einzustellenden Zwei- oder Dreiradfahrzeuges eingestellt werden.

Günstig ist es auch, wenn das Koppelstück eine geneigte Ebene aufweist, die einen spitzen Winkel zwischen den Haltebügeln und der Laserhalterung ausbildet. Dadurch wird schon konstruktiv der entsprechende Winkel zwischen den Haltebügeln und der Laserhalterung ausgebildet, ohne dass unbedingt eine Verschwenkeinrichtung zwischen diesen Teilen nötig ist.

In einer vorteilhaften Ausführungsform der Erfindung sind die Haltebügel separat ausgebildete Ausleger und sind die Koppelenden der Haltebügel als ineinander greifende Zahnradelemente ausgebildet. Dadurch wird jede Verstellung eines der Haltebügel auf den jeweils anderen Haltebügel übertragen.

Dabei können beispielsweise die Zahnradelemente relativ zueinander drehbar an Verbindungszylindern ausgebildet sein, die auf der geneigten Ebene des Koppelstücks montiert sind.

In einer weiteren Ausgestaltung der Erfindung weist das Koppelstück eine Schwenkeinrichtung auf.

Dadurch ist eine Winkelverstellung der Ausrichtung der Laserhalterung möglich.

Dabei weist die Schwenkeinrichtung eine Schwenkplatte mit einem gebogenen Führungsschlitz auf und die Laserhalterung weist einen Haltestab mit einem durch den Führungsschlitz ragenden Führungs- und Fixierelement auf. Bei dieser Ausgestaltung ist die Laserhalterung entlang der durch den Führungsschlitz vorgegebenen Bewegungsbahn verschwenkbar und mittels des Führungs- und Fixierelementes, das beispielsweise eine Fixierschraube sein kann, in der jeweiligen Stellung fixierbar.

Die Lenkerausrichtungseinrichtung kann besonders kompakt gestaltet werden, wenn der Haltestab eine seitliche Aussparung aufweist, an den die Schwenkplatte angelehnt ist.

Eine dauerhaft zuverlässige Funktion der erfindungsgemäßen Lenkerausrichtungseinrichtung wird erreicht, wenn die Haltebügel, mit Ausnahme der Halteelemente, zusammen aus einem Materialstück ausgebildet sind und zusammen einen das Koppelstück überbrückenden Bogen bilden.

Die Halteelemente können auf unterschiedliche Weise an den Haltebügeln befestigt werden. Beispielsweise können die Haltebügel an Unterseiten der Halteenden jeweils eine Abflachung aufweisen, und die jeweiligen Halteelemente an die Abflachung geschraubt sein, wobei die Halteelemente jeweils eine Halteplatte, die auf der Abflachung aufliegt, und einen Haltestift aufweisen, der sich vorzugsweise in einem rechten Winkel von der Abflachung weg erstreckt.

In einer anderen Variante können die Halteenden der Haltebügel jeweils eine Durchgangsbohrung aufweisen, durch die jeweils eines der Halteelemente hindurchgeführt ist.

Bevorzugte Ausführungsformen der vorliegenden Erfindung, deren Aufbau, Funktion und Vorteile werden im Folgenden anhand von Figuren näher erläutert, wobei
- Figur 1: schematisch ein Fahrrad mit einer daran angebrachten ersten Ausführungsform der erfindungsgemäßen Lenkerausrichtungseinrichtung in einer perspektivischen Ansicht zeigt;
- Figur 2: schematisch die in Figur 1 eingesetzte erste Ausführungsform der erfindungsgemäßen Lenkerausrichtungseinrichtung in einer perspektivischen Ansicht zeigt;
- Figur 3: schematisch ein Fahrrad mit einer daran angebrachten zweiten Ausführungsform der erfindungsgemäßen Lenkerausrichtungseinrichtung in einer perspektivischen Ansicht zeigt;
- Figur 4: schematisch die in Figur 3 eingesetzte zweite Ausführungsform der erfindungsgemäßen Lenkerausrichtungseinrichtung in einer perspektivischen Ansicht zeigt;
- Figur 5: schematisch ein Fahrrad mit einer daran angebrachten dritten Ausführungsform der erfindungsgemäßen Lenkerausrichtungseinrichtung in einer perspektivischen Ansicht zeigt; und
- Figur 6: schematisch die in Figur 5 eingesetzte dritte Ausführungsform der erfindungsgemäßen Lenkerausrichtungseinrichtung in einer perspektivischen Ansicht zeigt.

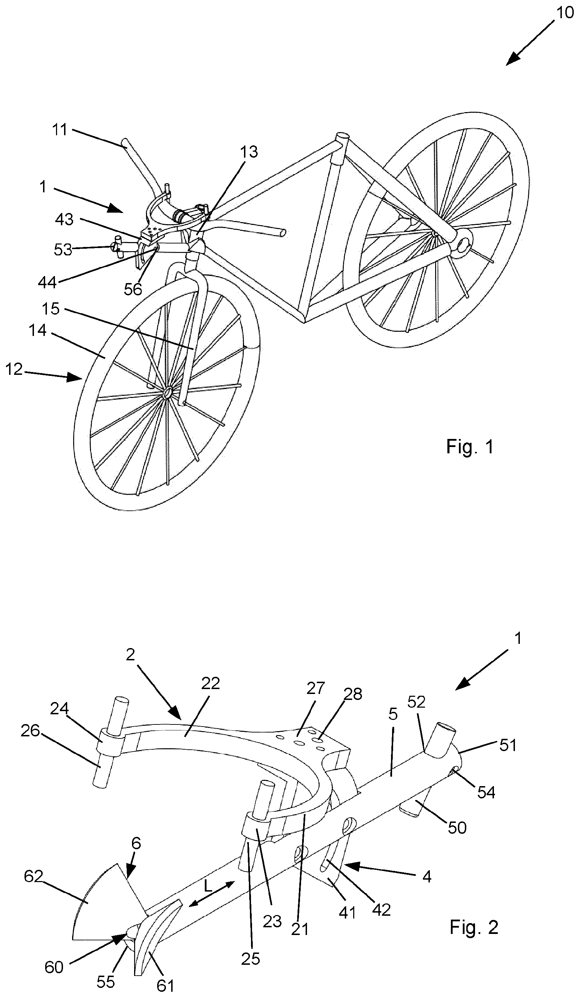

Die Figuren 1, 3 und 5 zeigen jeweils beispielhaft ein Fahrrad 10 mit einer daran vorgesehenen Ausführungsform einer erfindungsgemäßen Lenkerausrichtungseinrichtung 1, 1', 1". Das Fahrrad 10 weist neben einer Vielzahl weiterer Bauteile einen Lenker 11, ein Vorderrad 12 und einen den Lenker 11 mit dem Vorderrad 12 verbindenden Rahmen auf, welcher unter anderem ein unterhalb des Lenkers 11, zwischen dem Lenker 11 und dem Vorderrad 12 angeordnetes Steuerrohr 13 aufweist.

Die in Figur 2 im Detail gezeigte erste Ausführungsform der erfindungsgemäßen Lenkerausrichtungseinrichtung 1 weist eine Halteeinrichtung 2 auf, mit der die Lenkerausrichtungseinrichtung 1 auf den Lenker 11 des Fahrrades 10 aufgehängt werden kann. Die Halteeinrichtung 2 ist in der gezeigten Ausführungsform bogenförmig ausgebildet. Die beiden hier also aus einem Materialstück gefertigten Bogenhälften der Halteeinrichtung 2 bilden jeweils einen Haltebügel 21, 22 aus.

Die Haltebügel 21, 22 weisen jeweils an ihren freien Halteenden 23, 24 davon auskragende Halteelemente 25, 26 auf. In der gezeigten Ausführungsform sind die Halteelemente 25, 26 als Haltestifte ausgebildet. Die freien Halteenden 23, 24 der Haltebügel 21, 22 weisen jeweils eine Durchgangsbohrung auf, durch jeweils einer der Haltestifte hindurchgeführt ist. Um die Durchgangsbohrungen in die Halteenden 23, 24 einbringen zu können, sind bei der gezeigten Ausführungsform die Halteenden 23, 24 der Haltebügel 21, 22 gegenüber den zu den Halteenden 23, 24 hinführenden Bügelbereichen der Haltebügel 21, 22 verstärkt ausgebildet.

Die Haltebügel 21, 22 gehen bei der gezeigten Ausführungsform mittig der Halteeinrichtung 2 ineinander über, sind also an dieser Stelle, die eine Koppelstelle 27 für eine Ankopplung weiterer Bauteile der Lenkerausrichtungseinrichtung 1 an deren Halteeinrichtung 2 ausbildet, einstückig ausgebildet. Die Koppelstelle 27 ist breiter als die Bügelbereiche und flach ausgebildet. Damit bilden Haltebügel 21, 22 einen geschlossenen Bogen aus. Dieser Bogen überbrückt ein Koppelstück 4 der Lenkerausrichtungseinrichtung 1 und ist mit diesem verbunden.

Das Koppelstück 4 verbindet die Halteeinrichtung 2 mit einer nachfolgend noch näher beschriebenen Laserhalterung 5. Bei der Lenkerausrichtungseinrichtung 1 ist das Koppelstück 4 als eine Schwenkeinrichtung ausgebildet.

Wie es in Figur 2 zu sehen ist, kann die Schwenkeinrichtung beispielsweise eine Schwenkplatte 41 mit einem darin oder daran ausgebildeten gebogenen Führungsschlitz 42 aufweisen. Wie es in Figur 1 zu sehen ist, weist die Schwenkeinrichtung ferner eine in einem Winkel zu der Schwenkplatte 41 ausgebildete und mit dieser verbundene oder einstückig mit dieser ausgebildete Koppelplatte 43 auf. mit der die Schwenkeinrichtung mit der Halteeinrichtung 2 verbunden ist. Die Verbindung erfolgt hier mittels Schrauben, wobei entsprechende Schraubendurchführungen 28 an der Koppelstelle 27 ausgebildet sind.

Die Schwenkeinrichtung ist mittels eines Drehgelenkes 44 an der Laserhalterung 5 angebracht. Ferner ragt ein Führungs- und Fixierelement der Laserhalterung 5 durch den Führungsschlitz 42 der Schwenkeinrichtung. Somit ist die Laserhalterung 5 durch das Zusammenwirken von Führungsschlitz 42 und Führungs- und Fixierelement an der Schwenkeinrichtung geführt verschwenkbar und in einer gewünschten Stellung fixierbar.

In der gezeigten Ausführungsform ist die Laserhalterung 5 als ein Haltestab ausgebildet.

In Figur 1 sieht man, dass der Haltestab einseitig eine seitliche flache Aussparung 56 aufweist, an der die Schwenkplatte 41 anliegt.

An einem Laserhalteende 51 der Laserhalterung 5 weist diese eine quer zur Längsachse der Laserhalterung 5 verlaufende Durchgangsbohrung 52 auf, in der ein Laser 50 aufgenommen ist. In der gezeigten Ausführungsform ist der Laser 50 ein Linienlaser, speziell ein Kreuzlinienlaser.

In die Durchgangsbohrung 52 mündet ein parallel zur Längsausrichtung L der Laserhalterung 5 ausgerichteter Längsschlitz 53, der in Figur 1 zu sehen ist.

Quer zu dem Längsschlitz 53 verläuft bei der Lenkerausrichtungseinrichtung 1 eine Fixierbohrung 54 durch die Laserhalterung 5. In die Fixierbohrung 54 ist eine hier nicht gezeigte Fixierschraube zum Festziehen des Längsschlitzes 53 nach einem Einbringen des Lasers 50 in die Durchgangsbohrung 52 einführbar.

An einem dem Laserhalteende 51 gegenüberliegenden Stützende 55 der Laserhalterung 5 ist ein Abstützelement 6 angeordnet. In der gezeigten Ausführungsform ist das Abstützelement aus zwei Prismen 61, 62 ausgebildet. Die beiden Prismen 61, 62 sind so zueinander ausgerichtet, dass zwischen ihnen eine V-förmige Stützkerbe 60 ausgebildet ist, die sich an dem Rahmen des Fahrrades 10, in dem Ausführungsbeispiel von Figur 1 an dem Steuerrohr 13 des Fahrrades 10, abstützen kann.

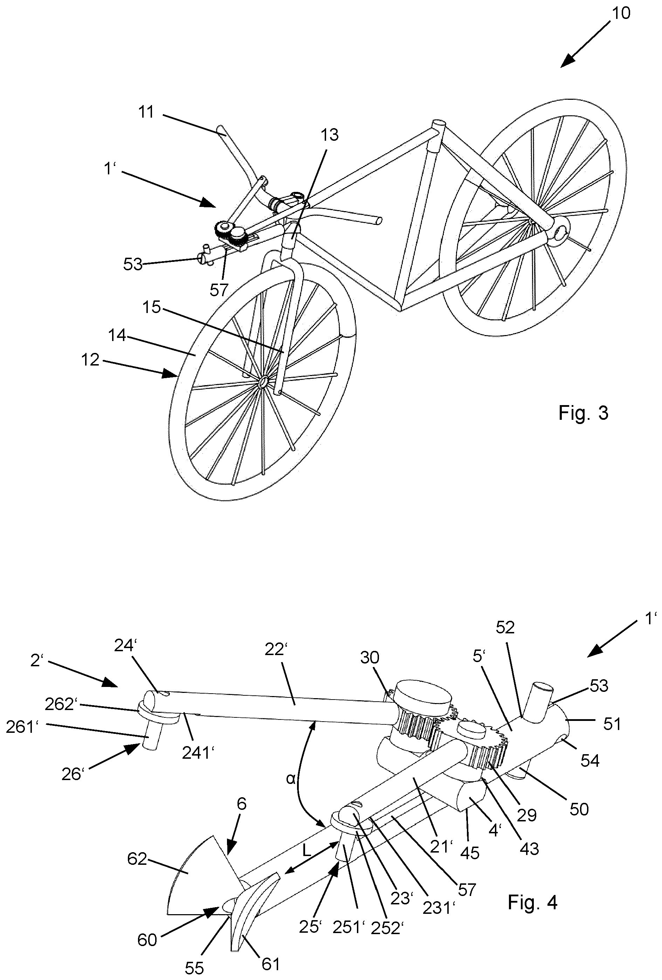

Figur 4 zeigt eine zweite Ausführungsform einer erfindungsgemäßen Lenkerausrichtungseinrichtung 1' in einer perspektivischen Ansicht. Die Lenkerausrichtungseinrichtung 1' ist in Figur 3 an dem bereits oben im Hinblick auf Figur 1 beschriebenen Fahrrad 10 angebracht.

Die Lenkerausrichtungseinrichtung 1' weist zwei separat voneinander ausgebildete Haltebügel 21', 22' auf. Die Haltebügel 21', 22' sind jeweils als stabförmige Ausleger ausgebildet. An ihren Halteenden 23', 24' weisen die Haltebügel 21', 22' jeweils eine jeweils einer Laserhalterung 5' der Lenkerausrichtungseinrichtung 1' gegenüber befindliche Abflachung 231', 241' auf. Auf der jeweiligen Abflachung 231', 241' liegt jeweils eine Halteplatte 252', 262' eines Halteelementes 25', 26' der Lenkerausrichtungseinrichtung 1' auf. Ferner erstreckt sich jeweils ein Haltestift 251', 261' der Halteelemente 25', 26' von der Abflachung 231', 241' vorzugsweise in einem rechten Winkel weg. Somit kann der jeweilige Haltestift 251', 261' den Lenker 11 des Fahrrades 10, wie in Figur 3 gezeigt, übergreifen.

An ihren den Halteenden 23', 24' gegenüberliegenden Koppelenden der Haltebügel 21', 22' weisen diese jeweils ineinander greifende Zahnradelemente 29, 30 auf. Durch die Zahnradelemente 29, 30 kann ein Spreizwinkel α zwischen den Haltebügeln 21', 22' verstellt werden.

Die Zahnradelemente 29, 30 sind relativ zueinander drehbar. Die Zahnradelemente 29, 30 sind jeweils an einem Zylindermantel eines Verbindungszylinders 31, 32 ausgebildet. Untere Enden der Verbindungszylinder 31, 32 sind auf einer geneigten Ebene 43 eines Koppelstücks 4' montiert.

Das Koppelstück 4' ist als ein Block ausgebildet, der einerseits über die Verbindungszylinder 31, 32 mit den Haltebügeln 21', 22' verbunden ist und der andererseits mit seiner Unterseite 45 auf der Laserhalterung 5' montiert ist. Durch die sich auf der Oberseite des Koppelstücks 4' befindliche geneigte Ebene sind die darauf montierten Haltebügel 21', 22' in einem spitzen Winkel relativ zu einer Längsausrichtung L der Laserhalterung 5' ausgerichtet.

Bei der Lenkerausrichtungseinrichtung 1' ist das Koppelstück 4' entlang einer in der Laserhalterung 5' ausgebildeten Längsführung 57 verfahrbar und in dieser an einer gewünschten Position mit einem an dem Koppelstück 4' ausgebildeten Führungs- und Fixierelement fixierbar.

In der gezeigten Ausführungsform ist die Längsführung 57 als eine Längsnut und das Führungs- und Fixierelement ist ein Nutenstein.

Die Laserhalterung 4' ist an ihren Laserhalteende 51 und an ihrem Stützende 55 wie die Laserhalterung 5 der oben beschriebenen Lenkerausrichtungseinrichtung 1 ausgebildet, weshalb hier auf die obige Beschreibung vollumfänglich verwiesen wird.

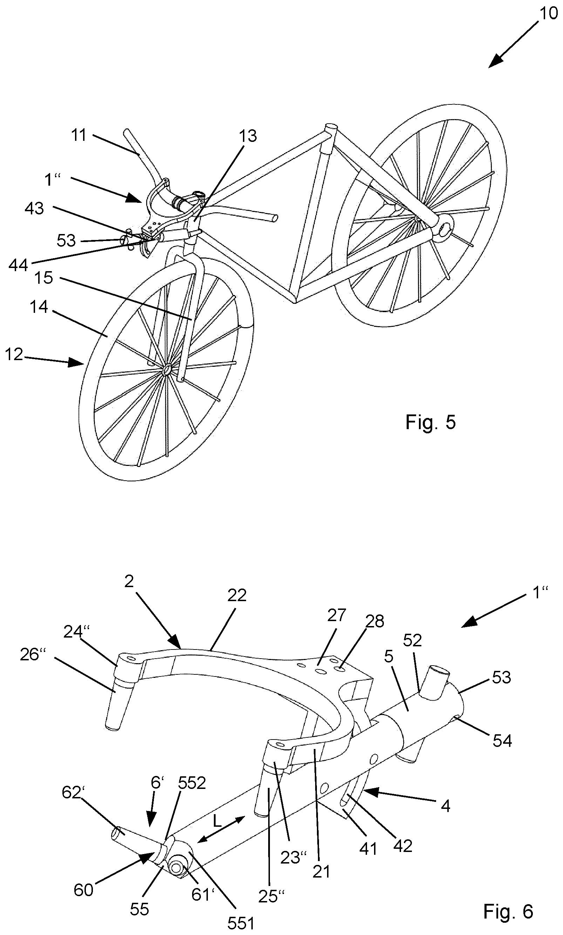

Die in Figur 6 im Detail gezeigte dritte Ausführungsform der erfindungsgemäßen Lenkerausrichtungseinrichtung 1" ist ähnlich der Lenkerausrichtungseinrichtung 1 aus den Figuren 1 und 2 ausgebildet, weshalb hier hinsichtlich der Beschreibung der Lenkerausrichtungseinrichtung 1" - mit Ausnahme der unten beschriebenen geänderten Details - auf die obige Beschreibung der Lenkerausrichtungseinrichtung 1 verwiesen wird.

Die Lenkerausrichtungseinrichtung 1" weist eine Abstützelement 6' mit zwei Dornen 61', 62' auf, die von dem Stützende 55 der Laserhalterung 5 auskragen. Dabei bilden die beiden Dorne 61', 62' zwischen sich eine V-förmige Stützkerbe 60 aus. Die Dorne 61', 62' sind jeweils an abgeflachte, winklig zueinander ausgerichtete Endabschnitte 551, 552 des Stützendes 55 geschraubt.

Ferner weist die Lenkerausrichtungseinrichtung 1" Haltelemente 25", 26" in Form von Dornen auf, die im rechten Winkel zu der Ausrichtung der Haltebügel 21, 22 in Halteenden 23", 24" der Haltebügel 21, 22 geschraubt sind.

In der gezeigten Ausführungsform sind die Dorne 61', 62' und die dornenförmigen Halteelemente 25", 26" gleich ausgebildet, können in anderen Ausführungsformen der Erfindung jedoch auch unterschiedlich ausgebildet sein. Sie sind in der gezeigten Ausführungsform als Kegelstümpfe ausgebildet.

Bei allen Ausführungsformen der Lenkerausrichtungseinrichtung 1, 1', 1" wird im Gebrauch die Lenkerausrichtungseinrichtung 1, 1', 1" auf das Fahrrad 10 aufgesetzt und der Lenker 11 oder eine Gabel 15 des Fahrrades 10 wird solange verstellt, bis der Laser 50 mittig auf einen Fahrradreifen 14 des Vorderrades 12 eine Kreuzlinie projiziert. So kann die Ausrichtung vom Vorderrad 12 zum Lenker 11 einfach dargestellt werden. In jedem Fall richtet sich die Lenkerausrichtungseinrichtung 1, 1', 1" selbst aus. Die Lenkerausrichtungseinrichtung 1, 1', 1" kann an unterschiedlichen Stellen am Fahrrad 10 oder einem anderen Zwei- oder Dreirad platziert werden.

## Patentansprüche

1. Lenkerausrichtungseinrichtung (1, 1', 1") für ein Zwei- oder Dreiradfahrzeug mit einer Halteeinrichtung (2, 2') und einem Laser (50), wobei die Halteeinrichtung (2, 2') zwei Haltebügel (21, 22; 21', 22") aufweist, deren freie Enden jeweils ein Halteende (23, 24; 23', 24'; 23", 24") bilden, von dem jeweils wenigstens ein Halteelement (25, 26; 25', 26'; 25", 26") auskragt, und deren andere Enden an einem Koppelstück (4, 4') der Lenkerausrichtungseinrichtung (1, 1', 1") form-, kraft- und/oder stoffschlüssig miteinander verbunden oder einstückig ausgebildet sind, und die Lenkerausrichtungseinrichtung (1, 1', 1") eine an dem Koppelstück (4, 4') befestigte Laserhalterung (5, 5') aufweist, die den Laser (50) hält, wobei an einem dem Laser (50) gegenüber befindlichen Ende der Laserhalterung (5, 5') ein Abstützelement (6, 6') zur Anlage an einem Rahmen des Zwei- oder Dreiradfahrzeuges angeordnet ist, **dadurch gekennzeichnet, dass**
entweder das Koppelstück (4) eine Schwenkeinrichtung aufweist oder ist, wobei die Schwenkeinrichtung eine Schwenkplatte (41) mit einem gebogenen Führungsschlitz (42) aufweist und die Laserhalterung (5) einen Haltestab mit einem durch den Führungsschlitz (42) führenden Führungs- und Fixierelement aufweist,
oder das Koppelstück (4') entlang einer in der Laserhalterung (5') ausgebildeten Längsführung (57) verfahrbar und in dieser an einer gewünschten Position mit einem an dem Koppelstück (4') ausgebildeten Führungs- und Fixierelement fixierbar ist.

2. Lenkerausrichtungseinrichtung nach Anspruch 1, **dadurch gekennzeichnet, dass** der Laser (50) ein Kreuzlinienlaser ist.

3. Lenkerausrichtungseinrichtung nach einem der vorhergehenden Ansprüche, **dadurch gekennzeichnet, dass** die Laserhalterung (5, 5') an ihrem dem Abstützelement (6, 6') gegenüberliegenden Laserhalteende (51) einen in eine Durchgangsbohrung (52) mündenden Längsschlitz (53) aufweist, wobei der Laser (50) durch die Durchgangsbohrung (52) hindurchgeführt ist.

4. Lenkerausrichtungseinrichtung nach einem der vorhergehenden Ansprüche, **dadurch gekennzeichnet, dass** das Abstützelement (6, 6') eine V-förmige Stützkerbe (60) aufweist.

5. Lenkerausrichtungseinrichtung nach Anspruch 4, **dadurch gekennzeichnet, dass** das Abstützelement (6, 6') aus zwei Prismen (61, 62) oder aus zwei die V-förmige Stützkerbe (60) zwischen sich einschließenden Stützdornen (61', 62') ausgebildet ist.

6. Lenkerausrichtungseinrichtung nach einem der vorhergehenden Ansprüche, **dadurch gekennzeichnet, dass** das Koppelstück (4') eine geneigte Ebene (43) aufweist, die einen spitzen Winkel zwischen den Haltebügeln (21', 22') und der Laserhalterung (5') ausbildet.

7. Lenkerausrichtungseinrichtung nach einem der vorhergehenden Ansprüche, **dadurch gekennzeichnet, dass** die Haltebügel (21', 22') separat ausgebildete Ausleger sind und den Halteenden (23', 24') gegenüberliegende Koppelenden der Haltebügel (21', 22') ineinander greifende Zahnradelemente (29, 30) aufweisen.

8. Lenkerausrichtungseinrichtung nach den Ansprüchen 6 und 7, **dadurch gekennzeichnet, dass** die Zahnradelemente (29, 30) relativ zueinander drehbar an Verbindungszylindern (31, 32) ausgebildet sind, die auf der geneigten Ebene (43) des Koppelstücks (4') montiert sind.

9. Lenkerausrichtungseinrichtung nach einem der vorhergehenden Ansprüche, **dadurch gekennzeichnet, dass** der Haltestab eine seitliche Aussparung (56) aufweist, an den die Schwenkplatte (41) angelehnt ist.

10. Lenkerausrichtungseinrichtung nach einem der Ansprüche 1 bis 6, **dadurch gekennzeichnet, dass** die Haltebügel (21, 22), mit Ausnahme der Halteelemente (25, 26; 25", 26"), zusammen aus einem Materialstück ausgebildet sind und zusammen einen das Koppelstück (4) überbrückenden Bogen bilden.

11. Lenkerausrichtungseinrichtung nach einem der vorhergehenden Ansprüche, **dadurch gekennzeichnet, dass** die Haltebügel (21', 22') an Unterseiten der Halteenden (23', 24') jeweils eine Abflachung (231', 241') aufweisen, und die jeweiligen Halteelemente (25', 26') an die Abflachung (231', 241') geschraubt sind, wobei die Halteelemente (25', 26') jeweils eine Halteplatte (252', 262'), die auf der Abflachung (231', 241') aufliegt, und einen Haltestift (251', 261') aufweisen, der sich von der Abflachung (231', 241') weg erstreckt.

12. Lenkerausrichtungseinrichtung nach einem der Ansprüche 1 bis 10, **dadurch gekennzeichnet, dass** die Halteenden (23, 24) der Haltebügel (21, 22) jeweils eine Durchgangsbohrung aufweisen, durch die jeweils eines der Halteelemente (25, 26) hindurchgeführt ist.

## Claims

1. Handlebar alignment device (1, 1', 1'') for a two-wheeled or three-wheeled vehicle, comprising a holding device (2, 2') and a laser (50), wherein the holding device (2, 2') comprises two holding brackets (21, 22; 21', 22') whose free ends each form holding ends (23, 24; 23', 24'; 23'', 24''), from each of which at least one holding element (25, 26; 25', 26'; 25'', 26'') projects, and whose opposite ends are connected to one another in a positive-locking, force-locking and/or material-bonded manner by means of a coupling piece (4, 4') of the handlebar alignment device (1, 1', 1'') or are formed in one piece, and wherein the handlebar alignment device (1, 1', 1'') comprises a laser holder (5, 5') attached to the coupling piece (4, 4') and holding the laser (50), wherein a support element (6, 6') for resting on a frame of the two-wheeled or three-wheeled vehicle being arranged at an end of the laser holder (5, 5') opposite the laser (50), **characterized in that**
either the coupling piece (4) comprises or forms a pivoting device, wherein the pivoting device comprises a pivot plate (41) having an arcuate guide slot (42), and the laser holder (5) comprises a holding tab having a guide and fixing element extending through the guide slot (42),
or the coupling piece (4') is displaceable along a longitudinal guide (57) formed in the laser holder (5') and is fixable in a desired position by means of a guide and fixing element formed at the coupling piece (4').

2. Handlebar alignment device according to claim 1, **characterized in that** the laser (50) is a cross-line laser.

3. Handlebar alignment device according to one of the preceding claims**, characterized in that** the laser holder (5, 5') comprises, at its laser holder end (51) opposite the support element (6, 6'), a through-bore (52) opening into a longitudinal slot (53), wherein the laser (50) extends through the through-bore (52).

4. Handlebar alignment device according to one of the preceding claims, **characterized in that** the support element (6, 6') comprises a V-shaped support notch (60).

5. Handlebar alignment device according to claim 4, **characterized in that** the support element (6, 6') is formed by two prisms (61, 62) or by two support pins (61', 62') enclosing the V-shaped support notch (60) therebetween.

6. Handlebar alignment device according to one of the preceding claims, **characterized in that** the coupling piece (4') comprises an inclined surface (43) defining an acute angle between the holding brackets (21', 22') and the laser holder (5').

7. Handlebar alignment device according to one of the preceding claims, **characterized in that** the holding brackets (21', 22') are separately formed cantilevers and comprise gear elements (29, 30), which engage one another, at the coupling ends of the holding brackets (21', 22') opposite the holding ends (23', 24').

8. Handlebar alignment device according to claims 6 and 7, **characterized in that** the gear elements (29, 30) are mounted for rotation relative to one another on connecting cylinders (31, 32), which are mounted on the inclined surface (43) of the coupling piece (4').

9. Handlebar alignment device according to one of the preceding claims, **characterized in that** the holding tab comprises a lateral recess (56) adapted to bear against the pivot plate (41).

10. Handlebar alignment device according to one of claims 1 to 6, **characterized in that** the holding brackets (21, 22), with the exception of the holding elements (25, 26; 25', 26'; 25", 26"), are formed integrally from a single piece of material and together form an arch bridging the coupling piece (4).

11. Handlebar alignment device according to one of the preceding claims, **characterized in that** the holding brackets (21', 22') each comprise a flattened portion (231', 241') on the underside of the holding ends (23', 24'), and the respective holding elements (25', 26') are screwed to the flattened portion (231', 241'), each holding element (25', 26') comprising a holding plate (252', 262') resting on the flattened portion (231', 241') and a holding pin (251', 261') extending away from the flattened portion (231', 241').

12. Handlebar alignment device according to one of claims 1 to 10, **characterized in that** the holding ends (23, 24) of the holding brackets (21, 22) each comprise a through-bore through which a respective one of the holding elements (25, 26) extends.

## Revendications

1. Dispositif d'alignement de guidon (1, 1', 1") pour un véhicule à deux ou trois roues, comportant un dispositif de maintien (2, 2') et un laser (50), dans lequel le dispositif de maintien (2, 2') présente deux étriers de maintien (21, 22 ; 21', 22") dont les extrémités libres forment respectivement une extrémité de maintien (23, 24 ; 23', 24' ; 23", 24") à partir de laquelle au moins un élément de maintien (25, 26 ; 25', 26' ; 25", 26") fait saillie, et dont les autres extrémités sont reliées à une pièce d'accouplement (4, 4') du dispositif d'alignement de guidon (1, 1', 1") par complémentarité de forme, à force et/ou par liaison de matière, ou sont réalisées d'un seul tenant, et le dispositif d'alignement de guidon (1, 1', 1") présente un support de laser (5, 5') fixé à la pièce d'accouplement (4, 4') et maintenant le laser (50), dans lequel un élément d'appui (6, 6') est disposé à une extrémité, située en face du laser (50), du support de laser (5, 5'), lequel élément d'appui est destiné à venir en butée contre un châssis du véhicule à deux ou trois roues, **caractérisé en ce que**
soit la pièce d'accouplement (4) présente un dispositif de pivotement ou est elle-même ce dispositif de pivotement, dans lequel le dispositif de pivotement présente une plaque pivotante (41) comportant une fente de guidage (42) en arc, et le support de laser (5) présente une tige de maintien comportant un élément de guidage et de fixation traversant la fente de guidage (42),
soit la pièce d'accouplement (4') peut se déplacer le long d'un guide longitudinal (57) réalisé dans le support de laser (5') et y être fixée dans une position souhaitée à l'aide d'un élément de guidage et de fixation réalisé sur la pièce d'accouplement (4').

2. Dispositif d'alignement de guidon selon la revendication 1, **caractérisé en ce que** le laser (50) est un laser à lignes croisées.

3. Dispositif d'alignement de guidon selon l'une des revendications précédentes, **caractérisé en ce que** le support de laser (5, 5') présente, sur son extrémité de maintien de laser (51) opposée à l'élément d'appui (6, 6'), une fente longitudinale (53) débouchant dans un alésage traversant (52), dans lequel le laser (50) est guidé à travers l'alésage traversant (52).

4. Dispositif d'alignement de guidon selon l'une des revendications précédentes, **caractérisé en ce que** l'élément d'appui (6, 6') présente une encoche d'appui (60) en forme de V.

5. Dispositif d'alignement de guidon selon la revendication 4, **caractérisé en ce que** l'élément d'appui (6, 6') est constitué de deux prismes (61, 62) ou de deux mandrins d'appui (61', 62') entre lesquels est enfermée l'encoche d'appui (60) en forme de V.

6. Dispositif d'alignement de guidon selon l'une des revendications précédentes, **caractérisé en ce que** la pièce d'accouplement (4') présente un plan incliné (43) qui forme un angle aigu entre les étriers de maintien (21', 22') et le support de laser (5').

7. Dispositif d'alignement de guidon selon l'une des revendications précédentes, **caractérisé en ce que** les étriers de maintien (21', 22') sont des bras réalisés séparément et **en ce que** les extrémités d'accouplement des étriers de maintien (21', 22'), situées à l'opposé des extrémités de maintien (23', 24'), présentent des éléments d'engrenage (29, 30) s'imbriquant.

8. Dispositif d'alignement de guidon selon les revendications 6 et 7, **caractérisé en ce que les** éléments d'engrenage (29, 30) sont conçus de manière à pouvoir tourner les uns par rapport aux autres sur des vérins de liaison (31, 32) qui sont montés sur le plan incliné (43) de la pièce d'accouplement (4').

9. Dispositif d'alignement de guidon selon l'une des revendications précédentes, **caractérisé en ce que** la tige de maintien présente un évidement latéral (56) contre lequel s'appuie la plaque pivotante (41).

10. Dispositif d'alignement de guidon selon l'une des revendications 1 à 6, **caractérisé en ce que** les étriers de maintien (21, 22), à l'exception des éléments de maintien (25, 26 ; 25", 26"), sont réalisés ensemble à partir d'un seul morceau de matériau et forment ensemble un arc enjambant la pièce d'accouplement (4).

11. Dispositif d'alignement de guidon selon l'une des revendications précédentes, **caractérisé en ce que** les étriers de maintien (21', 22') présentent, sur les faces inférieures de leurs extrémités de maintien (23', 24'), respectivement un méplat (231', 241'), et **en ce que** les éléments de maintien (25', 26') respectifs sont vissés sur le méplat (231', 241'), dans lequel les éléments de maintien (25', 26') présentent respectivement une plaque de maintien (252', 262') qui repose sur le méplat (231', 241'), et une goupille de maintien (251', 261') s'étendant à partir du méplat (231', 241').

12. Dispositif d'alignement de guidon selon l'une des revendications 1 à 10, **caractérisé en ce que** les extrémités de maintien (23, 24) des étriers de maintien (21, 22) présentent respectivement un alésage traversant à travers lequel passe respectivement l'un des éléments de maintien (25, 26).
